# EUROPEAN PATENT APPLICATION

(11) **EP 2 905 165 A1**
(43) Date of publication of application: **12.08.2015**
(21) Application number: 13844458.3
(22) Date of filing: 24.09.2013
(51) Int. Cl.: B60L 3/00, B60K 7/00, B60L 15/20

(54) **MOTOR FAULT DETECTION DEVICE FOR ELECTRIC AUTOMOBILE**

(30) Priority: 03.10.2012 JP 2012221070
(71) Applicant: NTN Corporation, Osaka-shi, Osaka 550-0003 (JP)
(72) Inventor: LI, Guodong, Iwata-shi, Shizuoka 438-0037 (JP)
(74) Representative: Hirsch & Associés
(86) International application number: PCT/JP2013/075653
(87) International publication number: WO 2014/054454

(57) **Abstract**

A motor abnormality detection apparatus for an electric vehicle is provided which is able to accurately detect an abnormality of electric motors and allows the cost to be reduced. The apparatus includes: a steering angle sensor (15b) sensing a steering angle of the vehicle; rotation angle sensors (36) sensing rotation angles of the respective motors (6); a vehicle speed sensor (9); a control map (10a) storing a relationship among a difference between rotation angles of the left and right motors (6, 6) operating normally, a steering angle, and a vehicle speed; and an abnormality determiner (11) determining the abnormality of the motor (6), when a difference between rotation angles of the sensed left and right motors (6, 6) deviates from the difference between the rotation angles retrieved from the map (10a) based on the sensed steering angle and the sensed vehicle speed.

## Description

### CROSS REFERENCE TO THE RELATED APPLICATION

This application is based on and claims Convention priority to Japanese patent application No. 2012-221070, filed October 3, 2012, the entire disclosure of which is herein incorporated by reference as a part of this application.

### BACKGROUND OF THE INVENTION

### (Field of the Invention)

The present invention relates to a motor abnormality detection apparatus for an electric vehicle, and relates to a technique capable of accurately detecting an abnormality of a drive device.

### (Description of Related Art)

A control method and apparatus for an electric vehicle have been proposed which allow the vehicle to continue to travel, when an abnormality such as malfunction in a drive device or an electric motor unit in an in-wheel motor drive system for the electric vehicle occurs, by another electric motor unit (Patent Documents 1 and 2). In an electric vehicle which includes a drive device independently driving at least left and right wheels and including an electric motor unit, when an abnormality of either one of the drive devices is occurs, a detector for detecting the abnormality of the drive device is meaningful. The detector will be described in the following 1 to 3.
1. A torque command for a driving motor unit and a driving current supplied to the driving motor unit are compared. When the driving current indicates that it is abnormal with respect to the torque command, it is determined that an abnormality of the drive device has occurred.
2. A wheel speed of a wheel driven by the drive device and a vehicle speed or a wheel speed of another wheel that is laterally symmetric thereto are compared. When the wheel speed indicates that it is abnormal, it is determined that an abnormality of the drive device has occurred.
3. The drive device includes a torque sensor which senses driving torque at the driving motor unit. When output torque of the driving motor unit sensed by the torque sensor indicates that it is abnormal with respect to the torque command for the driving motor unit, it is determined that an abnormality of the drive motor unit has occurred.

There is a method in which, when an abnormality of the electric motor is determined, steering assist torque is generated in a direction in which yaw moment generated with the abnormality of the electric motor unit is cancelled. In addition, for example, there is also a method in which yaw moment generated in the vehicle is reduced by decreasing a driving force of a driving motor unit on the same axle at the side laterally opposite to a side determined to have the abnormality, and a slip ratio of the tire is reduced by decreasing a driving force at the laterally opposite side, thereby ensuring a sufficient lateral frictional force generated in the tire.

### [Prior Art Document]

### [Patent Document]

[Patent Document 1] JP Laid-open Patent Publication No. 2010-166740
[Patent Document 2] JP Laid-open Patent Publication No. 2006-333603

### SUMMARY OF THE INVENTION

The above-described detector for detecting an abnormality of the drive device has the following problems.
1. In order to detect an abnormality of the driving electric motor unit, the drive device needs a torque sensor which senses driving torque of the driving motor unit, and thus becomes expensive. In addition, due to a voltage drop of a battery, execution of control of a weak magnetic field in a high speed range, or the like, the torque command and the torque of the motor unit sensed by the torque sensor do not necessarily fall within a normal error range. Thus, an abnormality of the driving motor unit may be erroneously detected.
2. It is necessary to include a wheel speed sensor which allows the wheel speed of the wheel and the vehicle speed or the wheel speed of another wheel that is laterally symmetric thereto to be compared. This leads to an increase in the cost.

An object of the present invention is to provide a motor abnormality detection apparatus for an electric vehicle which is able to accurately detect an abnormality of electric motor units in the electric vehicle and allows the cost to be reduced as compared to the conventional art. The general aspects of the present invention will now be described using the reference signs in the figures showing embodiments.

A motor abnormality detection apparatus for an electric vehicle according to the present invention is a motor abnormality detection apparatus having a drive device 8 including an electric motor unit 6. The motor abnormality detection apparatus is configured to detect an abnormality of the electric motor unit 6. The electric motor unit 6 includes electric motor units 6, 6 which independently drive at least left and right wheels 2, 2, respectively. The motor abnormality detection apparatus includes: a steering angle sensor 15b configured to sense a steering angle of the vehicle; rotation angle sensors 36 configured to sense rotation angles of the respective electric motor units 6; a vehicle speed sensor 9 configured to sense a vehicle speed; a control map 10a configured to store a relationship among a value associated with a difference between rotation angles of the left and right electric motor units 6, 6 that operate normally, that is, the motor units in a normal state, a steering angle, and a vehicle speed; and an abnormality determiner 11 configured to determine the abnormality of the electric motor unit 6, when a difference between rotation angles of the left and right electric motor units 6, 6 which are sensed by the rotation angle sensors 36 deviates from a value associated with the difference between the rotation angles which is retrieved from the control map 10a based on the steering angle and the vehicle speed sensed by the steering angle sensor 15b and the vehicle speed sensor 9, respectively.

According to this configuration, during traveling of the electric vehicle, the steering angle sensor 15b senses the steering angle of the vehicle. The rotation angle sensors 36 sense the respective rotation angle of the electric motor units 6. The vehicle speed sensor 9 senses the vehicle speed. In the control map 10a, the relationship among the value associated with the difference between the rotation angles of the left and right electric motor units 6, 6 that operate normally, a steering angle, and a vehicle speed is stored. During a right or left turn, a difference between rotations of the inner and outer wheels corresponding to the steering angle occurs, and thus a steering angle is also taken into consideration in the control map 10a. In other words, in the control map 10a, a rotation angle which takes into consideration a difference between rotations of the inner and outer wheels corresponding to the steering angle is set, so that it is possible to accurately perform a determination as to an abnormality of the electric motor unit 6 even during non-straight traveling of the vehicle.

The abnormality determiner 11 determines that the electric motor unit 6 is normal, when the difference between the actual rotation angles sensed by the rotation angle sensors 36 falls within the value associated with the difference between the rotation angles which is retrieved from the control map 10a based on the actual steering angle and the actual vehicle speed sensed by the steering angle sensor 15b and the vehicle speed sensor 9, respectively. On the other hand, the abnormality determiner 11 determines an abnormality of the electric motor units 6, when the difference between the actual rotation angles deviates from the value associated with the difference between the rotation angles which is retrieved from the control map 10a. In this case, even when a voltage of a battery 19 drops, it is possible to accurately detect an abnormality of the electric motor units 6. In addition, it is possible to detect an abnormality of the electric motor units 6 without using an expensive torque sensor or the like, and thus the cost can be reduced as compared to the conventional art. When an abnormality of the electric motor unit 6 is determined, for example, driver's attention is drawn to the abnormality of the electric motor unit 6, so that the driver can take necessary measures against the electric motor unit 6 early.

The control map 10a may store, at intervals of a vehicle speed or in increments of a vehicle speed, a threshold of the difference between a rotation angle of the electric motor unit 6 operating normally that drives either one wheel 2 of the left and right wheels 2, 2 and a rotation angle of the electric motor unit 6 operating normally that drives the other wheel 2. In this example, the value associated with the difference between the rotation angles is defined as a threshold of the difference between the rotation angles of the left and right electric motor units 6, 6 that operate normally. By setting the thresholds of the differences between the rotation angles in a normal state at short vehicle speed intervals, it is possible to accurately detect an abnormality of the electric motor units 6 regardless of the vehicle speed.

The abnormality determiner 11 may determine the abnormality of either one or both of the electric motor units 6, when the difference between the rotation angle of the electric motor unit 6 that drives the either one wheel 2 of the left and right wheels 2, 2 and the rotation angle of the electric motor unit 6 that drives the other wheel 2 deviates from the threshold which is stored in the control map 10a.

Upon determination of the abnormality of the electric motor unit 6, the abnormality determiner 11 may further compare differences between the vehicle speed sensed by the vehicle speed sensor 9 and respective rotation speeds of the electric motor units 6, 6 of the left and right wheels 2, 2 which are obtained on the basis of the rotation angles sensed by the rotation angle sensors 36, and may determine the abnormality of one of the electric motor units 6 that has the rotation speed with a greater difference from the vehicle speed. By identifying the electric motor unit 6 determined to have the abnormality as described above, it is possible to continue to use the electric motor unit 6 operating normally, and it is possible to repair or replace only the electric motor unit 6 having the abnormality. Thus, man-hours for the repair or the replacement can be reduced.

The abnormality determiner 11 may determine the abnormality of the electric motor unit 6 not only during forward traveling of the vehicle but also during backward traveling of the vehicle. It is possible to determine the abnormality of the electric motor unit 6 during forward traveling of the vehicle as well as during backward traveling of the vehicle, and thus in addition to the effect that the abnormality of the electric motor unit 6 can be detected early, the versatility as a motor abnormality detection apparatus increases.

The electric motor unit 6 may drive either of or both front wheels and rear wheels 3, 2 of the vehicle. The electric motor unit 6 may be partially or entirely disposed within the wheel 2, and the drive device 8 may form an in-wheel motor drive system which includes the electric motor unit 6, a wheel bearing unit 4, and a reducer unit 7.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a block diagram of a schematic configuration showing an electric vehicle according to a first embodiment of the present invention in a plan view;
Fig. 2 is a block diagram of a control system showing a motor abnormality detection apparatus of the electric vehicle;
Fig. 3 is a circuit diagram of an inverter unit of the electric vehicle;
Fig. 4A is a diagram showing an example of a control map of the motor abnormality detection apparatus;
Fig. 4B is a diagram showing another example of the control map of the motor abnormality detection apparatus;
Fig. 5 is a graph showing a change of a rotation angle of an electric motor unit in the motor abnormality detection apparatus during traveling of the vehicle in a drive range;
Fig. 6 is a graph showing changes of the rotation angle of the electric motor unit in the motor abnormality detection apparatus with respect to different rotation speeds during traveling of the vehicle in the drive range;
Fig. 7 is a graph showing a change of the rotation angle of the electric motor unit in the motor abnormality detection apparatus during traveling of the vehicle in a reverse range;
Fig. 8 is a graph showing changes of the rotation angle of the electric motor unit in the motor abnormality detection apparatus with respect to different rotation speeds during traveling of the vehicle in the reverse range; and
Fig. 9 is a plan view showing a schematic configuration of electric motor units of an electric vehicle according to a second embodiment of the present invention.

### DESCRIPTION OF EMBODIMENTS

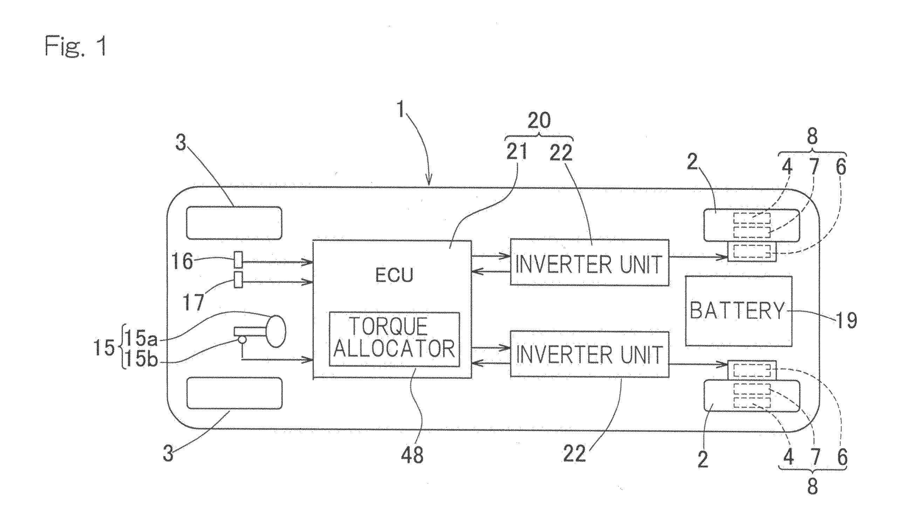

A motor abnormality detection apparatus for an electric vehicle according to a first embodiment of the present invention will be described with reference to Figs. 1 to 8. Fig. 1 is a block diagram of a schematic configuration showing an electric vehicle equipped with the motor abnormality detection apparatus according to the embodiment, in a plan view. The electric vehicle is a four-wheel vehicle that includes a vehicle body 1 with left and right rear wheels 2 and left and right front wheels 3, with the rear wheels 2 being drive wheels and the front wheels 3 being driven wheels. The front wheels 3 are steered wheels. The electric vehicle of this example includes drive devices 8, 8 which drive the respective left and right wheels 2, 2, which are the drive wheels, by independent electric motor units 6, 6, respectively. Rotation of each electric motor unit 6 is transmitted via a reducer unit 7 and a wheel bearing unit 4 to the wheel 2. The electric motor unit 6 of each drive device 8 is partly or entirely disposed within the wheel 2, and each drive device 8 forms an in-wheel motor drive system which includes the electric motor unit 6, the reducer unit 7, and the wheel bearing unit 4. Each of the wheels 2, 3 is equipped with a brake which is not shown.

A control system will be described. As shown in Fig. 1, the vehicle body 1 is equipped with a motor drive system 20 which includes an ECU 21 and a plurality of inverter units 22. The ECU 21 is primary control means configured to perform general integrated control of the vehicle and send a command to each inverter unit 22. Each inverter unit 22 is configured to perform control of each traction electric motor unit 6 according to a command from the ECU 21. The ECU 21 includes a computer, programs that may be executed by the computer, and various electronic circuits. A common computer or electrical circuitries on a common board may form light current systems for the ECU 21 and the inverter units 22.

The ECU 21 includes a torque allocator 48. The torque allocator 48 is configured to generate an accelerating/decelerating command in the form of a torque value, which will influence the electric motor units 6, 6 of the left and right wheels, based on a signal indicating accelerator position outputted from an accelerator manipulation unit 16, a decelerating command outputted from a brake manipulation unit 17, and a cornering command outputted from a steering device 15, and to send the accelerating/decelerating command to the inverter units 22. The torque allocator 48 is configured to, in response to a decelerating command outputted from the brake manipulation unit 17, generate a braking torque command allocated to regenerative braking of the electric motor unit 6 and a braking torque command allocated to the operation of the brakes which are not shown. Such a braking torque command allocated to regenerative braking is reflected in a torque command value that serves as the aforementioned accelerating/decelerating command that is supplied to the respective traction electric motor units 6, 6.

The accelerator manipulation unit 16 includes an accelerator pedal and a sensor configured to sense the depression of the accelerator pedal. The brake manipulation unit 17 includes a brake pedal and a sensor configured to sense the depression of the brake pedal. The steering device 15 includes a steering wheel 15a and a steering angle sensor 15b configured to sense a steering angle which is a rotation angle of the steering wheel 15a. A battery 19 is mounted on the vehicle body 1 and is used for driving the electric motor units 6 and as a power source for an entire electrical system of the vehicle.

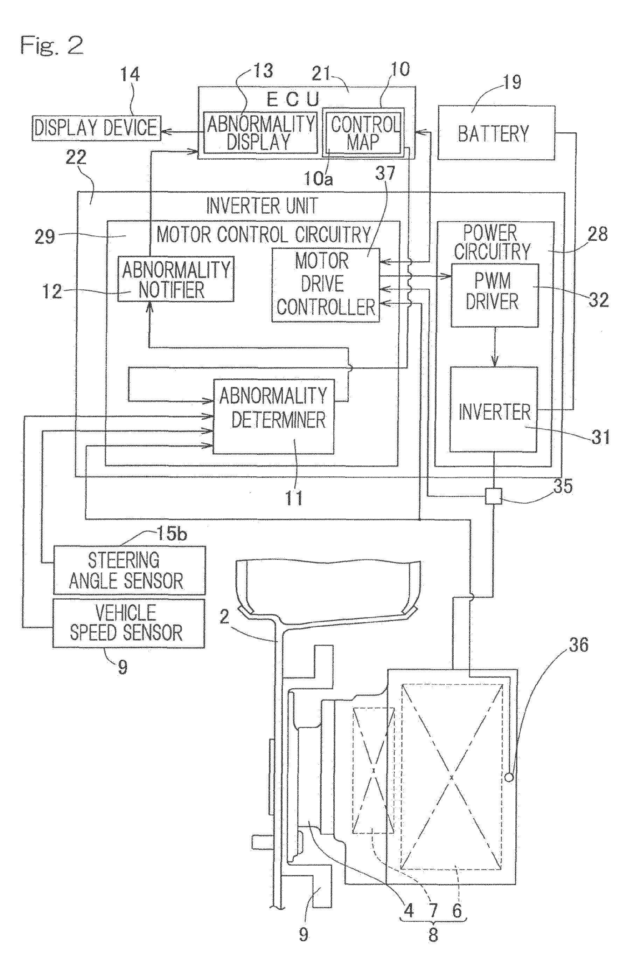

As shown in Fig. 2, each inverter unit 22 includes: a power circuitry 28 provided for each electric motor unit 6; and a motor control circuitry 29 configured to control the power circuitry 28. A common motor control circuitry 29 may be provided for different power circuitries 28. Independent motor control circuitries 29 may be provided for respective different power circuitries 28. The motor control circuitry 29 is configured to send various information related to the in-wheel motor drive system held by the motor control circuitry 29, such as a variety of detected values or various control values, to the ECU 21. The power circuitry 28 includes an inverter 31 and a PWM driver 32 configured to drive the inverter 31. The inverter 31 is configured to convert a DC power from the battery 19 into a three-phase AC power used to drive the electric motor unit 6.

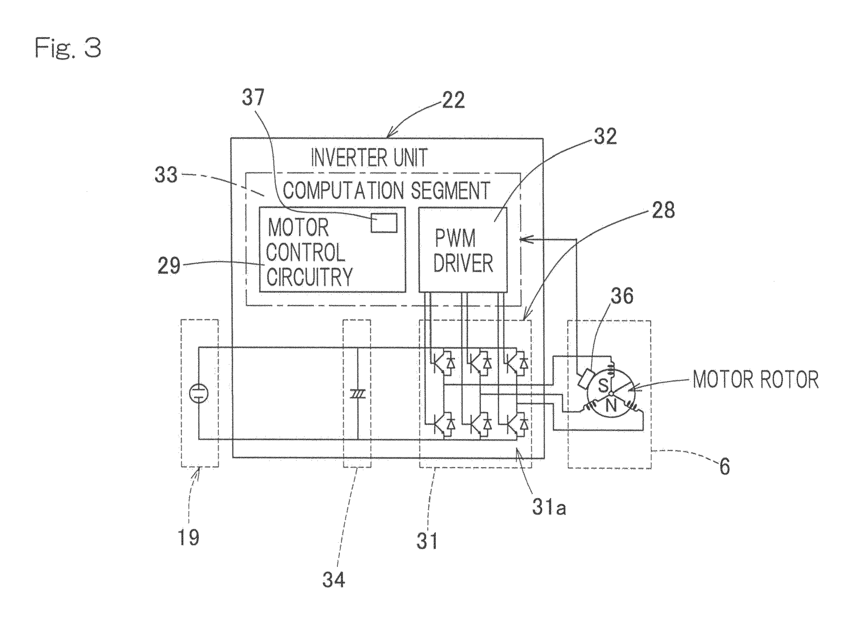

As shown in Fig. 3, each electric motor unit 6 includes a three-phase synchronous motor such as an IPM (Interior Permanent Magnet) synchronous motor. The inverter 31 includes a plurality of driving elements 31a and is configured to produce driving voltage pulses for the corresponding three phases (U phase, V phase, and W phase) of the electric motor unit 6. As each driving element 31a, a semiconductor switching element is used. A motor drive controller 37 is configured to perform pulse width modulation based on a received current command to generate ON/OFF commands to the PWM driver 32, and the PWM driver 32 drives the driving elements 31a.

The PWM driver 32, which serves as a light current circuit segment in the power circuitry 28, and the motor control circuitry 29 form a computation segment 33 which serves as a light current circuit segment in the inverter unit 22. The computation segment 33 includes a computer, programs that may be executed by the computer, and electronic circuits. In addition, for example, a smoothing segment 34, which includes a smoothing capacitor, is also provided in the inverter unit 22 so as to be interposed in parallel between the battery 19 and the inverter 31.

Each electric motor unit 6 includes a rotation angle sensor 36 configured to sense a rotation angle of a motor rotor. In order to maximize the efficiency of the electric motor unit 6, on the basis of a relative rotation angle between a motor stator and the motor rotor which is sensed by the rotation angle sensor 36, the motor drive controller 37 of the motor control circuitry 29 is configured to control timings at which respective phase alternating currents are supplied to coils of the stator.

As shown in Fig. 2, the electric vehicle is equipped with the motor abnormality detection apparatus configured to detect an abnormality of the electric motor units 6. The motor abnormality detection apparatus includes the steering angle sensor 15b, the rotation angle sensor 36, a vehicle speed sensor 9 configured to sense a vehicle speed, a storage unit 10, abnormality determiner 11, and abnormality notifier 12. The abnormality determiner 11 and the abnormality notifier 12 are provided in the motor control circuitry 29 configured as described above. The storage unit 10 is provided in a storage area in the ECU 21. The storage unit 10 includes a control map 10a (described later) which stores a relationship among a value associated with a difference in rotation angle, a steering angle, and a vehicle speed (a travel speed of the vehicle). The map 10a can be updated. Alternatively, the control map may be provided in a storage area in the motor control circuitry 29.

The abnormality determiner 11 is configured to determine an abnormality of the electric motor units 6, when the difference between the rotation angles of the left and right electric motor units 6, 6 which are sensed by the rotation angle sensors 36, that is, the difference between AD values of left and right rotation angle sensor signals deviates from a value associated with the difference between the rotation angles which is retrieved from the control map 10a based on the steering angle and the vehicle speed sensed by the steering angle sensor 15b and the vehicle speed sensor 9, respectively. The word "AD value" refers to a value obtained by converting an analog value of the rotation angle sensor signal to a digital value. The abnormality determiner 11 determines an abnormality of the electric motor units 6 not only during forward traveling of the vehicle but also during backward traveling of the vehicle.

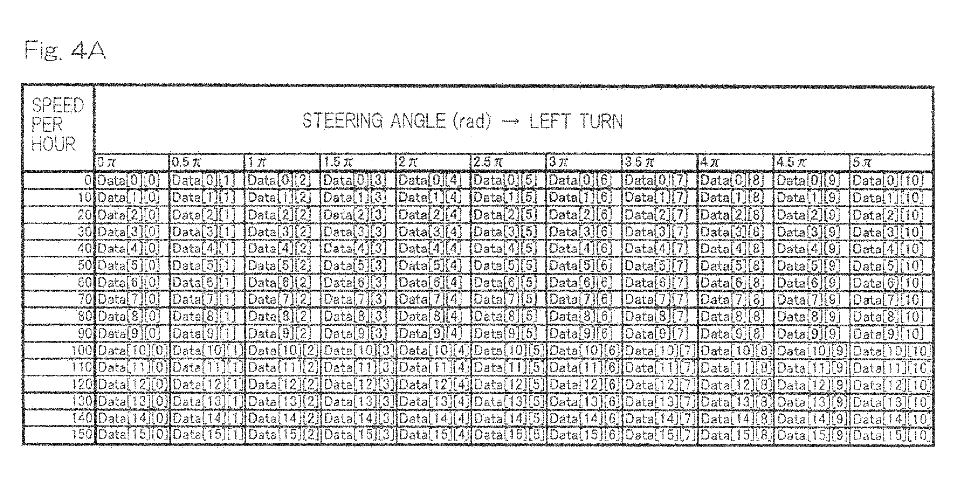

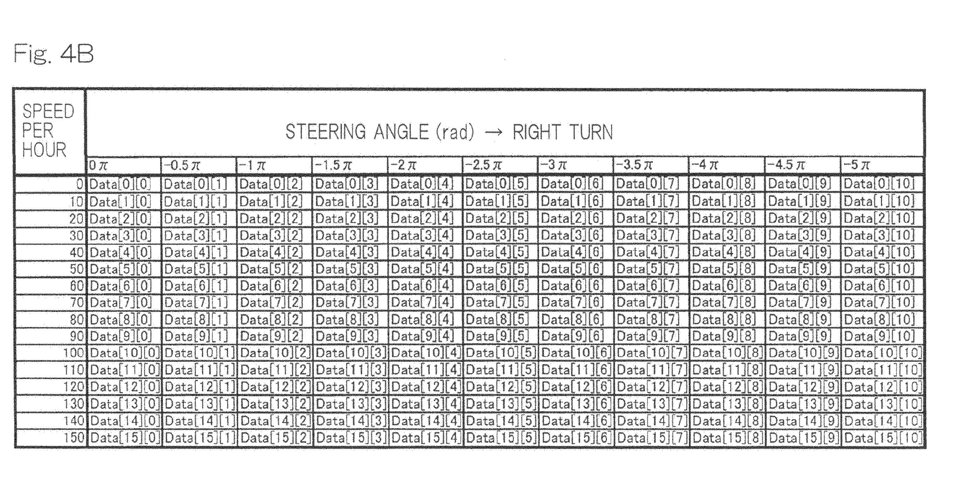

Figs. 4A and 4B show an example of the control map. Fig. 4A is a diagram showing thresholds of the differences between the AD values of rotation angle sensor signals for the left and right electric motor units that operate normally with respect to steering angles for left turns or left cornering caused by operating the steering wheel in a counterclockwise direction as seen from a driver. The thresholds are set in accordance with vehicle speeds. In this example, values associated with the differences between the rotation angles are defined as thresholds of the differences between the rotation angles of the left and right electric motor units 6, 6 that operate normally. Fig. 4B is a diagram showing thresholds of the difference between the AD values of rotation angle sensor signals for the left and right electric motor units that operate normally with respect to steering angles for right turns or right cornering. The thresholds are set in accordance with vehicle speeds.

A threshold which is a value obtained by subtracting the AD value of a rotation angle sensor signal obtained from the right-side electric motor unit that operates normally from the AD value of a rotation angle sensor signal obtained from the left-side electric motor unit that operates normally is represented as Data_ij in Figs. 4A and 4B. The thresholds are set in accordance with corresponding steering angles and a vehicle speeds. The thresholds are defined as appropriate, for example, by a test with an actual vehicle, simulation, or the like. In Figs. 4A and 4B, vehicle speeds are set in 10 km/h increments, and steering angles are set in 0.5π radian increments, but the present invention is not limited to this example.

The abnormality determiner 11 shown in Fig. 2 determines an abnormality of either one or both of the electric motor units 6, when the difference between the AD value of a rotation angle sensor signal from the electric motor unit 6 that drives one of the wheels 2 and the AD value of a rotation angle sensor signal from the electric motor unit 6 that drives the other wheel 2 deviates from Data_ij stored in the control map 10a as a value in a normal state. Next, upon determination of an abnormality of the electric motor units 6, the abnormality determiner 11 further compares the differences between the vehicle speed sensed by the vehicle speed sensor 9 and respective rotation speeds (described later) of the electric motor units 6, 6 of the pair of left and right wheels 2, 2 which are obtained on the basis of the rotation angles sensed by the respective rotation angle sensors 36, and determines an abnormality of one of the electric motor units 6 that has the rotation speed with a greater difference from the vehicle speed. When the abnormality determiner 11 determines an abnormality of the electric motor unit 6, the abnormality notifier 12 notifies the ECU 21 of the abnormality of the electric motor unit 6.

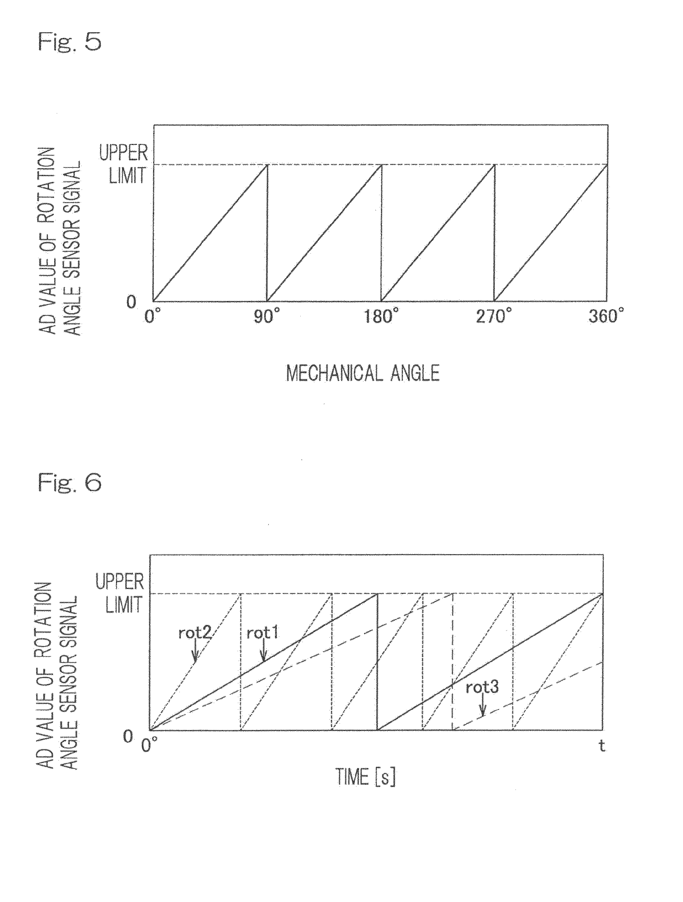

Fig. 5 is a graph showing a change of the rotation angle of the electric motor unit in the motor abnormality detection apparatus during traveling (forward traveling) of the vehicle in a drive range. A description will be given also with reference to Fig. 2. An analog signal from an electrical angle 360° of the rotation angle sensor 36 provided in the electric motor unit 6 is converted to an n-bit digital value, so that the electrical angle 360° is represented by an AD value of a rotation angle sensor signal. For example, in the case where a rotation angle sensor 36 with a shaft angle multiplier of 4X is used, when the motor rotor of the electric motor unit 6 makes one rotation (a mechanical angle of 360°), four sawtooth waves are outputted as a signal of the rotation angle sensor 36. One sawtooth wave represents a mechanical angle of 90°. When the motor rotor of the electric motor unit 6 is rotated in a counterclockwise (CCW) direction as seen from the output shaft side of the electric motor unit 6, the value of the rotation angle sensor 36 increases from 0 to an upper limit, returns to 0 when reaching the upper limit, and increases again from 0 to the upper limit, which is repeated.

The rotation speed or the number of revolutions (rpm) of the electric motor unit 6 can be calculated from an amount of change in the signal of the rotation angle sensor 36 during a given sampling time period. Specifically, when the rotation angle sensor 36 with a shaft angle multiplier of 4X is employed, a value obtained by dividing "60" by the sampling time period during which a rotation angle sensor signal is obtained is multiplied by the amount of change in the signal of the rotation angle sensor 36, and then the value then is divided by a value obtained by multiplying the upper limit by 4, whereby the rotation speed of the electric motor unit 6 can be calculated.

Fig. 6 is a graph showing changes of the rotation angle of the electric motor unit in the motor abnormality detection apparatus with respect to different rotation speeds during traveling of the vehicle in the drive range. Fig. 6 represents changes of the AD values of the rotation angle sensor signals with respect to the rotation speeds, rot1, rot2 and rot3, wherein rot2 > rot1> rot3 is satisfied, when the rotation direction of the electric motor unit is the counterclockwise (CCW) direction as seen from the output shaft side. The higher the rotation speed of the electric motor unit is, the larger the number of sawtooth waves outputted from the rotation angle sensor within a given time period is.

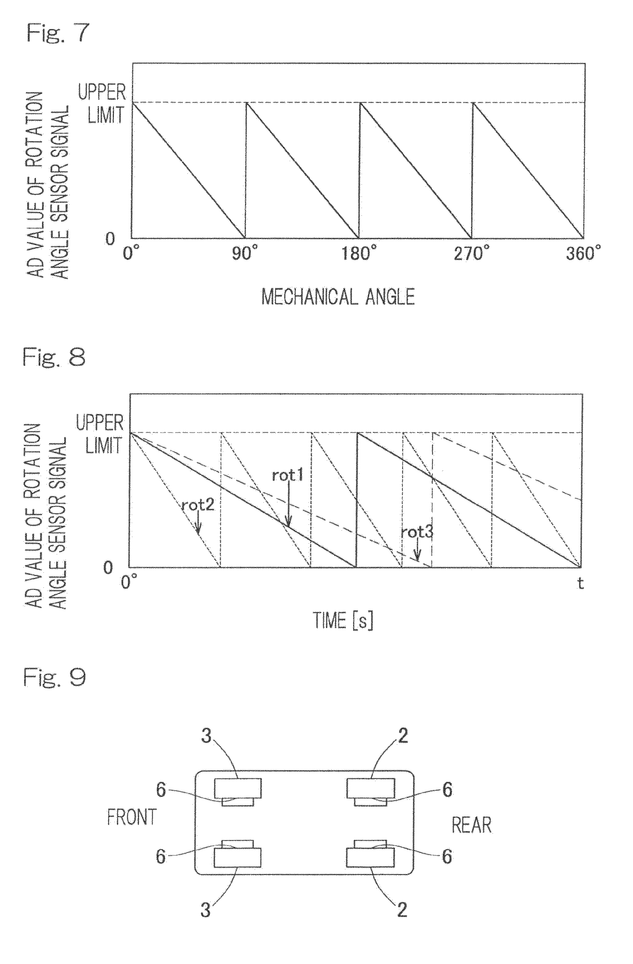

Fig. 7 is a graph showing a change of the rotation angle of the electric motor unit in the motor abnormality detection apparatus during traveling (backward traveling) of the vehicle in a reverse range. Fig. 7 indicates a change of the AD value of the rotation angle sensor signal when the motor rotor of the electric motor unit rotates in a clockwise (CW) direction as seen from the output shaft side of the electric motor unit. The value of the rotation angle sensor decreases from an upper limit to 0, returns to the upper limit when reaching 0, and decreases again from the upper limit to 0, which is repeated.

Fig. 8 is a graph showing changes of the rotation angle of the electric motor unit in the motor abnormality detection apparatus with respect to different rotation speeds during traveling of the vehicle in the reverse range. Fig. 8 represents changes of the AD values of the rotation angle sensor signals with respect to the rotation speeds, rot1, rot2, and rot3, wherein rot2 > rot1> rot3 is satisfied, when the rotation direction of the electric motor unit is the clockwise (CW) direction as seen from the output shaft side of the electric motor unit.

Advantageous effects will be described. During traveling of the electric vehicle, as shown in Fig. 2, the steering angle sensor 15b senses the steering angle of the vehicle, the rotation angle sensors 36 sense the respective rotation angles of the electric motor units 6, and the vehicle speed sensor 9 senses the vehicle speed. The abnormality determiner 11 determines an abnormality of either one or both of the electric motor units 6, when the difference between the AD value of the rotation angle sensor signal from the electric motor unit 6 that drives one wheel 2 and the AD value of the rotation angle sensor signal from the electric motor unit 6 that drives the other wheel 2 deviates from Data_ij stored in the control map 10a as a value in a normal state.

Upon determination of an abnormality of the electric motor units 6, the abnormality determiner 11 further compares the differences between the vehicle speed sensed by the vehicle speed sensor 9 and respective rotation speeds of the electric motor units 6, 6 of the pair of left and right wheels 2, 2 which are obtained on the basis of the rotation angles sensed by the rotation angle sensors 36, and determines the abnormality of one of the electric motor units 6 that has the rotation speed with a greater difference from the vehicle speed. By identifying the electric motor unit 6 determined to have the abnormality as described above, it is possible to continue to use the electric motor unit 6 operating normally, and it is possible to repair or replace only the electric motor unit 6 having the abnormality. Thus, man-hours for the repair or the replacement can be reduced.

By setting the thresholds (Data_ij) of the differences between the left and right rotation angles at short vehicle speed intervals in the control map 10a, the abnormality determiner 11 can accurately detect an abnormality of the electric motor units 6 regardless of the vehicle speed. In the control map 10a, rotation angles each of which takes into consideration a difference between rotations of the inner and outer wheels corresponding to the steering angle are set, so that it is possible to accurately perform a determination as to an abnormality of the electric motor units 6 even during non-straight traveling of the vehicle. Even when the voltage of the battery 19 drops, it is possible to accurately detect an abnormality of the electric motor units 6. In addition, it is possible to detect an abnormality of the electric motor units 6 without using an expensive torque sensor or the like, and thus the cost can be reduced as compared to the conventional art. Moreover, the abnormality notifier 12 notifies the ECU 21 of an abnormality of the electric motor unit 6, and an abnormality display 13 of the ECU 21 sends notice of the abnormality of the electric motor unit 6 to a display device 14, thereby allowing driver's attention to be drawn to the abnormality. Thus, the driver can take necessary measures against the abnormality of the electric motor unit 6 early.

In the above embodiment, the rear-wheel drive electric vehicle has been described, but the motor abnormality detection apparatus may be applied to a front-wheel drive electric vehicle which includes left and right front wheels as drive wheels and left and right rear wheels as driven wheels. Furthermore, the motor abnormality detection apparatus may be applied to a four-wheel drive electric vehicle which includes left and right front and rear wheels 3, 2 as drive wheels as in a second embodiment shown in Fig. 9.

Although the preferred embodiments and application embodiments have been described with reference to the accompanying drawings as presented above, those skilled in the art will readily conceive numerous changes and modifications within the framework of obviousness upon the reading of the specification herein presented of the present invention. Accordingly, such changes and modifications are to be construed as included in the scope of the present invention as delivered from the claims annexed hereto.

### [Reference Numerals]

- 2,3: wheel
- 6: electric motor unit
- 8: drive device
- 9: vehicle speed sensor
- 10a: control map
- 11: abnormality determiner
- 15b: steering angle sensor
- 36: rotation angle sensor

## Claims

1. A motor abnormality detection apparatus for an electric vehicle comprising a drive device including an electric motor unit, the motor abnormality detection apparatus being configured to detect an abnormality of the electric motor unit, the electric motor unit comprising electric motor units which independently drive at least left and right wheels, respectively, the motor abnormality detection apparatus comprising:
a steering angle sensor configured to sense a steering angle of the vehicle;
rotation angle sensors configured to sense rotation angles of the respective electric motor units;
a vehicle speed sensor configured to sense a vehicle speed;
a control map configured to store a relationship among a value associated with a difference between rotation angles of the left and right electric motor units that operate normally, a steering angle, and a vehicle speed; and
an abnormality determiner configured to determine the abnormality of the electric motor unit, when a difference between rotation angles of the left and right electric motor units which are sensed by the respective rotation angle sensors deviates from the value associated with the difference between the rotation angles which is retrieved from the control map based on the steering angle and the vehicle speed sensed by the steering angle sensor and the vehicle speed sensor, respectively.

2. The motor abnormality detection apparatus for the electric vehicle as claimed in claim 1, wherein the control map stores, at intervals of a vehicle speed, a threshold of the difference between a rotation angle of the electric motor unit operating normally that drives either one wheel of the left and right wheels and a rotation angle of the electric motor unit operating normally that drives the other wheel.

3. The motor abnormality detection apparatus for the electric vehicle as claimed in claim 2, wherein the abnormality determiner determines the abnormality of either one or both of the electric motor units, when the difference between the rotation angle of the electric motor unit that drives the either one wheel of the left and right wheels and the rotation angle of the electric motor unit that drives the other wheel deviates from the threshold stored in the control map.

4. The motor abnormality detection apparatus for the electric vehicle as claimed in claim 2 or 3, wherein upon determination of the abnormality of the electric motor unit, the abnormality determiner further compares differences between the vehicle speed sensed by the vehicle speed sensor and respective rotation speeds of the electric motor units of the left and right wheels which are obtained on the basis of the rotation angles sensed by the rotation angle sensors, and determines the abnormality of one of the electric motor units that has the rotation speed with a greater difference from the vehicle speed.

5. The motor abnormality detection apparatus for the electric vehicle as claimed in any one of claims 1 to 4, wherein the abnormality determiner determines the abnormality of the electric motor unit not only during forward traveling of the vehicle but also during backward traveling of the vehicle.

6. The motor abnormality detection apparatus for the electric vehicle as claimed in any one of claims 1 to 5, wherein the electric motor unit drives either of or both front wheels and rear wheels of the vehicle.

7. The motor abnormality detection apparatus for the electric vehicle as claimed in any one of claims 1 to 6, wherein the electric motor unit is partially or entirely disposed within the wheel, and the drive device forms an in-wheel motor drive system which includes the electric motor unit, a wheel bearing unit, and a reducer unit.
